# EUROPÄISCHE PATENTANMELDUNG

(11) **EP 0 941 891 A2**
(43) Veröffentlichungstag der Anmeldung: **15.09.1999**
(21) Anmeldenummer: 99104134.4
(22) Anmeldetag: 02.03.1999
(51) Int. Cl.: B60Q 11/00

(54) **Schaltungsanordnung für ein Kraftfahrzeug**

(30) Priorität: 07.03.1998 DE 19809880
(71) Anmelder: Hella KG Hueck & Co., 59552 Lippstadt (DE)
(72) Erfinder: Werner, Helmut, 59329 Wadersloh 2 (DE)

(57) **Zusammenfassung**

Beschrieben wird eine Schaltungsanordnung für ein Kraftfahrzeug zur Ansteuerung und Überwachung von Blinklampen in einem 12-V-Bordnetz durch einen Blinkgeber in einem 24-V-Bordnetz, wobei der Blinkgeber über seinen Ausgang die Blinklampen sowohl ansteuert als auch überwacht.

Die Schaltungsanordnung simuliert hierzu bei angeschlossener 12-V-Blinklampe die elektrischen Daten einer 24-V-Blinklampe.

## Beschreibung

Die Erfindung betrifft eine Schaltungsanordnung für ein Kraftfahrzeug zur Ansteuerung und Überwachung Von Blinklampen in einem 12-V-Bordnetz durch einen Blinkgeber in einem 24-V-Bordnetz, wobei der Blinkgeber über seinen Blinkgeberausgang die Blinklampen sowohl ansteuert als auch überwacht.

Der Erfindung liegt das Problem zugrunde, daß ein Zugfahrzeug oftmals eine höhere Bordnetzspannung aufweist als die, die für die Versorgung der Verbraucher im Hängerfahrzeug vorgesehen ist.

Um nun zum Beispiel auch ein Hängerfahrzeug mit einem 12-V-Spannungsbedarf mit einem Zugfahrzeug mit einem 24-V-Bordnetz verbinden zu können, ist auch eine 12-V-Versorgungsleitung vom Zugfahrzeug zum Hängerfahrzeug zu führen, wobei die 12-V-Spannung, z. B. der Mittelanzapfung einer geteilten Spannungsquelle (z.B .zwei 12-V-Akkumulatoren) des Zugfahrzeuges entnommen wird. Die Verbraucher des Hängerfahrzeuges können über Relais (zeitgemäß ausgeführt als Halbleiterrelais) mit der 12-V-Versorgungsleitung verbunden werden, wobei die Relais durch die geschalteten 24-V-Signalspannungen (für Leuchten, Bremsleuchten etc.) des Zugfahrzeuges gesteuert werden.

Problematisch ist hierbei die Ansteuerung der Blinklampen, da der Blinkgeber des Zugfahrzeuges über seinen Ausgang die Blinklampen nicht nur ansteuern, sondern auch deren Funktionsfähigkeit überwachen soll.

Vergrößert wird dieses Problem dadurch, daß zwei verschiedene Prinzipien der Blinklampenüberwachung zur Anwendung kommen, die im folgenden kurz erläutert werden sollen: Grundsätzlich erfaßt der Blinkgeber einen Spannungsabfall an einem blinkgeberinternen, der Blinklampe in Reihe geschalteten Meßwiderstand.

Bei dem ersten Überwachungsprinzip ("Widerstandskontrolle") schaltet der Blinkgeber über einen ersten Kontakt seines Blinkrelais die Blinklampe über den Meßwiderstand ein. Der Meßwiderstand ist hierbei, verglichen mit dem Blinklampenwiderstand, relativ hochohmig, so daß eine gut meßbare Spannung am Meßwiderstand abfällt. Nach Erfassung dieses Spannungsabfalles schließt ein zweiter Kontakt des Blinkgeberrelais einen Sekundenbruchteil später den Meßwiderstand kurz, wodurch die Blinklampe aufleuchtet.

Moderne Blinkgeber mit integrierten Operationsverstärkern können auch sehr geringe Spannungsabfälle an Meßwiderständen im Milliohmbereich erfassen. Da solche estrem niederohmige Meßwiderstände den Blinklampenstrom nicht nennenswert schwächen, brauchen diese nicht überbrückt zu werden, und das Blinkrelais benötigt daher nur einen einfachen Schaltkontakt zum Einschalten der Blinklampe. Dieses Überwachungsprinzip wird als "Stromkontrolle" bezeichnet.

Die Schwierigkeit, eine 12-V-Blinklampe, die durch einen Blinkgeber in einem 24-V-Bordnetz angesteuert wird, auf Funktionsfähigkeit zu prüfen, besteht darin, daß sich sowohl der Innenwiderstand als auch der zeitliche Stromverlauf beim Einschalten einer 12-V-Blinklampe von dem einer 24-V-Blinklampe unterscheidet. Ein für ein 24-V-Bordnetz ausgelegter Blinkgeber wird aber bei der Blinklampenprüfung die diesbezüglichen Werte einer 24-V-Blinklampe "erwarten".

Aus der Europäischen Patentanmeldung 0 129 221 ist eine Schaltungsanordnung bekannt, bei der ein 24-V-Blinkgeber eines Zugfahrzeuges auch 12-V-Blinklampen eines Hängerfahrzeuges ansteuern kann. Hierzu wird der Blinkgeberausgang für jede Fahrtrichtung jeweils mit einem elektronischen Spannungswandler, der zum Beispiel als Längsregler ausgeführt sein kann, verbunden, welcher eine geregelte 12-V-Spannung zur Ansteuerung der Blinklampen erzeugt. In den Stromkreis zwischen dem Ausgang des Blinkgebers und dem Spannungsregler ist jeweils die Spule eines Relais geschaltet, welches über seinen Schaltkontakt eine Kontrolleuchte einschaltet, wenn in dem Stromkreis ein ausreichend hoher Strom vom Blinkgeber zum Spannungswandler fließt.

Abgesehen davon, daß hier nicht der Blinkgeber die Blinklampenfunktion überwacht und dessen interne Kontrollschaltung gar nicht genutzt wird, weist diese Schaltung noch weitere Nachteile auf.

So wird für die durch das Relais geschaltete Kontrolleuchte, die sich in der Fahrerkabine befindet, eine zusätzliche Rückleitung benötigt.

Die Kontrollrelais werden durch einen Mindeststromfluß eingeschaltet, der von der in den Spannungsreglern erzeugten Spannung und der angeschlossenen Lampe mit der niedrigeren Spannung bestimmt wird. Ein Kurtschluß in der Lampenleitung oder im Spannungsregler führt zu einem Blinken der Kontrolleuchte im Blinkgebertakt, zumindest solange der Blinkgeber selbst nicht durch Überlastung defekt wird. Ein erheblicher Nachteil oder sogar eine Gefahr liegt darin, daß das Kontrollsystem des Blinkgebers im Zugfahrzeug einen höheren Strom "sieht", der durch den Spannungswandler und seine Lampenlast verursacht wird. Dieses kann dazu führen, daß der Ausfall einer Blinklampe am Zugfahrzeug nicht mehr erkannt wird.

Ein anderer Nachteil besteht darin, daß die Originalkontrollampe für den Anhänger dessen Vorhandensein auch anzeigt, wenn ein Anhänger mit verminderter Spannung betrieben wird. Das könnte zu Mißverständnissen führen.

Die Fehlererkennungsmöglichkeiten der vorbekannten Schaltung sind somit recht gering.

Ebenfalls nachteilig ist die Verwendung von als Längsregler ausgeführten Spannungswandlern, da diese bei der vorgesehenen Halbierung der Spannung eine Verlustleistung aufweisen, die der Leistung der angeschlossenen Verbraucher entspricht.

Es ist daher die Aufgabe der Erfindung, eine einfache und kostengünstige Schaltungsanordnung für ein Kraftfahrzeug zur Ansteuerung und Überwachung von Blinklampen in einem 12-V-Bordnetz durch einen Blinkgeber in einem 24-V-Bordnetz zu schaffen, bei der der Blinkgeber über seinen Ausgang die Blinklampen sowohl ansteuert als auch überwacht, welche die vorgenannten Nachteile nicht aufweist.

Diese Aufgabe wird durch die kennzeichnenden Merkmale des Anspruches 1 gelöst.

Die Erfindung geht von der Erkenntnis aus, daß sich die elektrischen Kennwerte, insbesondere der Einschaltstromverlauf und der Warmwiderstand, von kraftfahrzeugüblichen 12-V- und 24-V-Blinklampen zwar quantitativ, aber kaum qualitativ unterscheiden. So entspricht der zeitliche Verlauf des Einschaltstromes einer 12-V-Blinklampe qualitativ dem einer 24-V-Blinklampe gleicher Leistung, quantitativ unterscheiden sich beide durch einen Faktor von (ungefähr) 2.

Die erfindungsgemäße Einrichtung erfaßt nun den Blinklampenstrom durch die 12-V-Blinklampe und erzeugt mittels einer spannungsgesteuerten Stromquelle einen dem Blinklampenstrom proportionalen Stromverlauf, welcher dem einer 24-V-Blinklampe entspricht, und gibt diesen Stromverlauf auf den Blinkgeberausgang. Damit "sieht" das Kontrollsystem des Blinkgebers bei einer fehlerfreien 12-V-Blinklampe die Stromkurve einer 24-V-Blinklampe. Fehler der 12-V-Blinklampe (Unterbrechung, Kurzschluß, Toleranzüberschreitung bei den Lampendaten) werden direkt durch den 24-V-Blinkgeber erkannt und angezeigt.

Vorteilhafterweise können so 12-V-Blinklampen direkt durch den 24-V-Blinkgeber überwacht werden.

Spezielle Kontrollsysteme im Blinkgeberkreis sowie eine zusätzliche Kontrolleuchte und Meldeleitung wie bei der vorbekannten Schaltungsanordnung werden nicht benötigt.

Weitere vorteilhafte Ausgestaltungen und Weiterbildungen der erfindungsgemäßen Schaltungsanordnung ergeben sich aus den Unteransprüchen. So ist es besonders vorteilhaft, wenn die Blinklampen über einen Ruhekontakt des Relais und einen Vorwiderstand mit dem Blinkgeberausgang verbunden sind und eine Steuerungseinrichtung bei Anliegen eines Blinkimpulses am Blinkgeberausgang das Relais abhängig vom Spannungswert des Blinkimpulses oder zeitverzögert ansteuert.

Der Blinkgeberausgang ist somit bei Ausgabe des Blinkimpulses für einen kurzen Moment über den Vorwiderstand mit der Blinklampe verbunden. Hierdurch kann der Blinkgeber den Warmwiderstand der Blinklampe prüfen, wobei der Vorwiderstand so dimensioniert ist, daß die Summe aus Vorwiderstand und Blinklampenwiderstand dem Warmwiderstand einer 24-V-Blinklampe entspricht. Die 12-V-Blinklampe kann somit auch durch einen Blinkgeber mit einem Widerstandskontrollsystem angesteuert und geprüft werden. Dies ist besonders vorteilhaft, da zumeist nicht bekannt ist, welches Kontrollsystem der verwendete Blinkgeber aufweist. Durch die beschriebene Maßnahme ist dieses nun auch unerheblich.

Weiterhin ist es vorteilhaft, der spannungsgesteuerten Stromquelle eine spannungsgesteuerte Spannungsquelle, also einen Spannungsverstärker, vorzuschalten. Ein solcher Spannungsverstärker kann besonders vorteilhaft als Operationsverstärker ausgebildet werden, da dieser sehr kostengünstig ist und eine besonders geringe Anzahl von Bauteilen zur Außenbeschaltung benötigt. So kann dieser beispielsweise zusammen mit zwei Widerständen als invertierender Verstärker aufgebaut werden, wobei zudem durch das Verhältnis der Widerstände der Proportionalitätsfaktor zwischen dem Strom durch die 12-V-Blinklampe und dem dem Blinkgeberausgang zugeführten Strom vorgebbar ist.

Die spannungsgesteuerte Stromquelle kann besonders einfach durch Zusammenschaltung eines Widerstandes eines Operationsverstärkers und eines Transistors realisiert werden.

Besonders vorteilhaft ist es auch, als Relais ein kleinbauendes und verschleißfreies Halbleiterrelais vorzusehen.

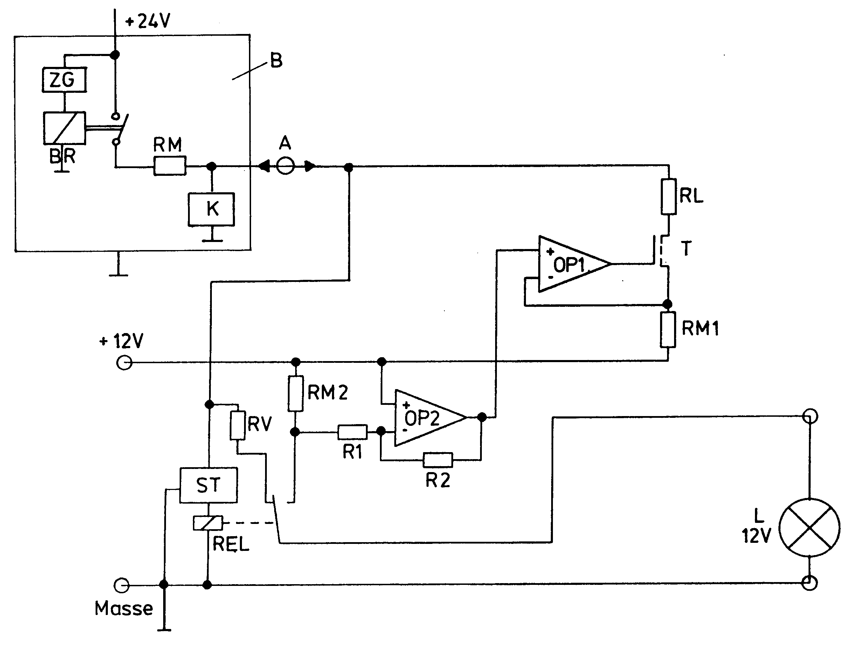

Im folgenden soll ein Ausführungsbeispiel der erfindungsgemäßen Schaltungsanordnung anhand der Zeichnung dargestellt und näher erläutert werden.

Die einzige Figur zeigt schematisch eine erfindungsgemäße Schaltungsanordnung zur Ansteuerung der Blinklampe für eine Fahrtrichtung.

Um sowohl Hängerfahrzeuge mit einem 24-V-Versorgungsspannungsbedarf als auch mit einem 12-V-Versorgungsspannungsbedarf an ein Zugfahrzeug elektrisch anschließen zu können, weist das Zugfahrzeug zweckmäßigerweise für jeden Hängertyp eine eigene Steckdose auf, welche die erforderlichen Signalspannungen dem Hängerfahrzeug zur Verfügung stellt.

Die erfindungsgemäße Schaltung ist (bis auf den Blinkgeber und die Blinklampen) elektrisch zwischen die 24-V- und die 12-V-Steckdose geschaltet und kann vorteilhafterweise zu einer nicht dargestellten Einrichtung gehören, welche die übrigen Signalspannungen (z. B. Bremslicht, Beleuchtung etc.) mittels Relais oder Halbleiterrelais von den 24 V des Zugfahrzeuges auf 12 V für das Hängerfahrzeug umsetzt.

Daher liegt an dieser Einrichtung auch eine 12-V-Versorgungsspannung, welche z. B. von einer Mittelanzapfung des Fahrzeugakkumulators abgenommen wird.

Die erfindungsgemäße Schaltungsanordnung weist einen Blinkgeber (B) auf, der zur elektrischen Ausstattung eines Zugfahrzeuges gehört, sowie eine angesteuerte Blinklampe (L), die zu einem Hängerfahrzeug gehört und eine Nennspannung von 12 V aufweist.

Der Aufbau des Blinkgebers (B) ist sehr stark vereinfacht dargestellt: Ein Zeitgeber (ZG) steuert ein Blinkrelais (BR), welches über seinen Schaltkontakt + 24 V auf seinen Ausgang (A) legt. Eine Kontrolleinrichtung (K) prüft die Höhe des Spannungsabfalls an einem blinkgeberinternen Meßwiderstand (RM) und stellt damit den Ausgangsstrom des Blinkgebers fest, woraus sich die Funktionsfähigkeit oder Nichtfunktionsfähigkeit der Blinklampe ergibt. Der schematisch dargestellte Blinkgeber überwacht die Blinklampe somit nach dem Prinzip der sogenannten "Stromkontrolle".

Abweichend davon kommen aber auch Blinkgeber mit einem sogenannten "Widerstandskontrollsystem" zur Anwendung. Bei einem solchen Blinkgeber wird ein höherohmiger Meßwiderstand vorgesehen, der beim Anziehen des Relais durch einen zweiten Relaiskontakt zeitverzögert überbrückt wird, so daß der Blinkgeber die volle Betriebsspannung an seinen Ausgang schalten kann. Die Messung der am Meßwiderstand abfallenden Spannung, welche vom Warmwiderstand der Blinklampe abhängt, erfolgt in dem kurzen Zeitraum (ca. ein bis zwei Millisekunden) zwischen dem Schließen des ersten und des zweiten Schaltkontaktes des Blinkrelais.

Die Ansteuerung und Kontrolle einer am Blinkgeberausgang angeschlossenen 24-V-Blinklampe ist damit in beiden Fällen problemlos möglich. Soll dagegen eine 12-V-Blinklampe angesteuert und kontrolliert werden, so ergibt sich nicht nur das Problem, daß die 12-V-Blinklampe aufgrund ihres geringeren Spannungsbedarfes nicht direkt an den Ausgang des Blinkgebers angeschlossen werden darf, sondern auch daß die zur Überwachung der Blinklampe herangezogenen elektrischen Daten (zeitlicher Verlauf des Einschaltstromes bzw. Warmwiderstand) nicht mit denen einer 24-V-Blinklampe übereinstimmen.

Dieses Problem löst die erfindungsgemäße Schaltungsanordnung, wobei es vorteilhafterweise unerheblich ist, welches Kontrollsystem der Blinkgeber aufweist.

Der Blinkgeberausgang (A) ist hier mit einer Ansteuereinrichtung (ST) verbunden, die entweder ab einer vorgegebenen Mindestspannung des Blinkimpulses am Blinkgeberausgang (A) oder aber mit einer Zeitverzögerung von wenigen Millisekunden nach dem Auftreten des Blinkimpulses ein Relais (REL) einschaltet.

Das Relais (REL) besitzt einen Umschaltkontakt, welcher die Blinklampe (L) in seiner Ruhestellung über einen Vorwiderstand (RV) mit dem Blinkgeberausgang (A) verbindet und in der Arbeitsstellung die Blinklampe (L) über einen Meßwiderstand (RM2) mit der 12-V-Spannungsversorgung (+ 12 V) verbindet.

Mit dem Meßwiderstand (RM2) verbunden ist eine spannungsgesteuerte Spannungsquelle (OP2, R₁, R₂), welche durch einen als invertierenden Verstärker geschalteten Operationsverstärker (OP2) ausgebildet ist.

Diese spannungsgesteuerte Spannungsquelle steuert eine spannungsgesteuerte Stromquelle (ausgebildet durch den Operationsverstärker (OP1), den Feldeffekttransistor (T) und den Meßwiderstand (RM1)) an. Die spannungsgesteuerte Stromquelle ist über den Lastwiderstand (R_{L}) mit dem Blinkgeberausgang (A) verbunden.

Die Funktionsweise der dargestellten Schaltungsanordnung ist folgende:

Die Ansteuereinrichtung (ST) schaltet beim Eintreffen eines Blinkimpulses am Ausgang (A) des Blinkgebers (B) das Relais (REL) zeitverzögert oder abhängig von der Spannungshöhe des Blinkimpulses ein. Bis das Relais (REL) schaltet, liegt die 12-V-Blinklampe (L) über den Vorwiderstand (RV) und den Relaisöffnerkontakt am Blinkgeberausgang (A). Der Wert des Vorwiderstandes (RV) ist dabei so gewählt, daß ein zum Blinkgeber gehörendes Widerstandskontrollsystem den Warmwiderstand einer 24-V-Blinklampe feststellt.

Wenn die 12-V-Blinklampe dagegen defekt ist, ist dieser Stromkreis unterbrochen, und der Blinkgeber (B) stellt den Ausfall der Blinklampe (L) fest.

Mit dem Anziehen des Relais (REL) legt dieses über seinen Schließerkontakt die Blinklampe (L) über den Meßwiderstand (RM2) an die 12-V-Spannungsversorgung (+ 12 V) an, wodurch die Blinklampe (L) aufleuchtet.

Der durch den Meßwiderstand (RM2) fließende Strom wird durch die spannungsgesteuerte Spannungsquelle (OP2, R₁, R₂) und die spannungsgesteuerte Stromquelle (OP1, RM1, T) aufgrund des Verhältnisses der Widerstände (R₂/R₁ bzw. RM2/RM1) untersetzt und über den Lastwiderstand (R_{L}) dem Blinkgeberausgang (A) zugeführt. Das Untersetzungsverhältnis ist dabei so gewählt, daß der dem Blinkgeberausgang (A) eingeprägte Strom dem Strom und dem zeitlichen Stromverlauf einer 24-V-Blinklampe entspricht.

Weist der Blinkgeber (B) nun ein Stromkontrollsystem auf, so erkennt er (bei funktionierender 12-V-Blinklampe) den Stromverlauf einer funktionierenden 24-V-Blinklampe. Damit arbeiten auch stromkontrollierende Kontrollsysteme im 24-V-Blinkgeber zuverlässig.

### Bezugszeichenliste

### Schaltungsanordnung für ein Kraftfahrzeug

- A: Blinkgeberausgang
- B: Blinkgeber
- BR: Blinkrelais
- K: Kontrolleinrichtung
- L: Blinklampe
- OP1, OP2: Operationsverstärker
- R₁, R₂: Widerstände
- R_{L}: Lastwiderstand
- RM, RM1, RM2: Meßwiderstände
- RV: Vorwiderstand
- REL: Relais
- ST: Ansteuereinrichtung
- T: Transistor
- + 12 V: 12-V-Spannungsversorgung
- OP2, R₁, R₂: spannungsgesteuerte Spannungsquelle (invertierender Verstärker)
- OP1, RM1, T: spannungsgesteuerte Stromquelle

## Patentansprüche

1. Schaltungsanordnung für ein Kraftfahrzeug zur Ansteuerung und Überwachung von Blinklampen in einem 12-V-Bordnetz durch einen Blinkgeber in einem 24-V-Bordnetz, wobei der Blinkgeber über seinen Blinkgeberausgang die Blinklampen sowohl ansteuert als auch überwacht, dadurch gekennzeichnet, daß der Blinkgeber (B) über seinen Blinkgeberausgang (A) ein Relais (REL) steuert, welches über einen Arbeitskontakt die Blinklampen (L) an das 12-V-Bordnetz anschaltet, daß in den Blinklampenstromkreis ein Meßwiderstand (RM2) geschaltet ist, daß die am Meßwiderstand (RM2) abfallende Spannung am Eingang einer spannungsgesteuerten Stromquelle (OP1, RM1, T) anliegt und daß die spannungsgesteuerte Stromquelle (OP1, RM1, T) dem Blinkgeberausgang (A) einen zum Blinklampenstrom proportionalen Strom einprägt.

2. Schaltungsanordnung nach Anspruch 1, dadurch gekennzeichnet, daß die Blinklampen (L) über einen Ruhekontakt des Relais (REL) und einen Vorwiderstand (RV) mit dem Blinkgeberausgang (A) verbunden sind und daß eine Steuerungseinrichtung (ST) beim Anliegen eines Blinkimpulses am Blinkgeberausgang (A) das Relais (REL) entweder abhängig vom Spannungswert des Blinkimpulses oder zeitverzögert ansteuert.

3. Schaltungsanordnung nach Anspruch 1, dadurch gekennzeichnet, daß zwischen den den Blinklampenstrom erfassenden Meßwiderstand (RM2) und der spannungsgesteuerten Stromquelle (OP1, RM1, T) eine spannungsgesteuerte Spannungsquelle (OP2, R₁, R₂) geschaltet ist.

4. Schaltungsanordnung nach Anspruch 3, dadurch gekennzeichnet, daß die spannungsgesteuerte Spannungsquelle durch einen als invertierender Verstärker geschalteten Operationsverstärker (OP2) ausgebildet ist.

5. Schaltungsanordnung nach Anspruch 1, dadurch gekennzeichnet, daß die spannungsgesteuerte Stromquelle durch einen Meßwiderstand (RM1), einen Transistor (T) und einen den Transistor ansteuernden Operationsverstärker (OP1) ausgebildet ist.

6. Schaltungsanordnung nach Anspruch 1, dadurch gekennzeichnet, daß das Relais (REL) ein Halbleiterrelais ist.
